# EUROPEAN PATENT SPECIFICATION

(11) **EP 2 248 431 B1**
(45) Date of publication and mention of the grant of the patent: **18.04.2012**
(21) Application number: 08702207.5
(22) Date of filing: 10.01.2008
(51) Int. Cl.: A23D 9/00, A23D 7/00

(54) **SOLID FATTY PRODUCT WHICH HAS A LOW SATURATED FAT CONTENT AND IS FREE OF TRANS FATTY ACIDS**
FESTES, TRANS-FETTSÄUREFREIES FETTPRODUKT MIT NIEDRIGEM GEHALT AN GESÄTTIGTEN FETTEN
PRODUIT GRAS SOLIDE À FAIBLE CONTENU EN GRAISSES SATURÉES NE CONTENANT PAS D'ACIDES GRAS TRANS

(43) Date of publication of application: 10.11.2010
(73) Proprietor: Team Foods Colombia S.a., 1 Bogotá (CO)
(72) Inventor: HUERTAS AMAYA, José Maria, 1 Bogotà (CO); RODRIGUEZ POSADA, Luidy Alfonso, 1 Bogotà (CO)
(74) Representative: Matthews, Derek Peter
(86) International application number: PCT/IB2008/000043
(87) International publication number: WO 2009/087432

(56) References cited:
- EP-A2- 1 159 877
- WO-A1-96/39855
- WO-A1-2007/061372
- WO-A2-2005/122777
- BERGER K.G.: 'Palm Oil Products -Why and How to Use Them' FETTE, SEIFEN UND ANSTRICHMITTEL vol. 88, no. 7, 1986, pages 250 - 258

## Description

### FIELD OF THE INVENTION

The present invention relates to a fatty product having a low content of saturated fat and being free from trans-isomers.

The fatty product of the present invention can be used directly as an ingredient for bread products elaboration, such as cakes, cookies, and bread among others, and for industrial and institutional deep frying of snacks, ring-shaped cakes, potatoes and other tubers and meats among others.

### BACKGROUND OF THE INVENTION

In the last years there has been a trend in the market towards more healthful products. The nature and composition of the fat materials in this trend play a dominant role due to the relationship found between ingestion of certain types of fat, with the risk of getting certain diseases such as cardiovascular disease. The fat materials are directly consumed as margarines and oils or indirectly in other food containing them within their ingredients (hidden fat).

A direct relation between the consumption of saturated fat with an increase in low density cholesterol level in blood serum and consumption of fat trans with an increase in low density cholesterol levels and a lowering of high density cholesterol, has been found.

Accordingly, there is a worldwide trend to reduce the consumption of these type of fat. It is so that organisms regulating the control of consumption of food have drafted programs addressed to food industry so that voluntarily and in some cases mandatory, begin the reduction of oils and fat present in the ingredients which cause such inconveniences.

Thus, since 2004 Denmark started to require that food having fat components should contain less than 2% of trans fats. Also Canada and the United States through the introduction of their laws on labeling food products of 2006, begun to display the composition of trans fats which such products may contain. FDA gave certain parameters for the use of terms free and low saturated fat and trans. In order for a food product to be considered being free from saturated fat it must contain less than 0.5 g of such type of fat by food portion. In order for a food product to be considered being free from trans fat it must also contain less than 0.5 g of trans fat by food portion; but, it is not completely clear if making this announcement requires that the product is additionally free from saturated fat.

In Latin America there is also a trend to relate health care with the type and quality of food consumption. Laid on the progress achieved in countries such as the United States, several Latin American countries have begun to issue laws addressed to the levels and types of fats being consumed.

The use of more healthy fats pose certain drawbacks to industries which use fats and oils for the manufacture of their products, which were previously made out from saturated and/or trans fats.

In order to be able to elaborate certain types of food products it is a requirement that the fat material used as ingredient has certain properties which are related to the physical status of these materials. The saturated and trans type fats are solid and have the melting and plasticity behavior wanted by food manufacturers, because they grant exceptional melting, texture and taste properties.

Then, it results very difficult to develop fatty products which are to be used in food industry and that comply with both the nutritional and health needs, as well as with the physical properties for their suitable utilization, as well as with the consumers' organoleptic demands.

The solid fats used by industry usually have saturated fat levels in combination with trans fats as high as 60%. The first step taken by food industry to adjust to new laws and offer healthier products was to reduce the trans fat from their food products. Nevertheless, the saturated fats level continued to be too high due to the need of having solid fat.

Apparently, it is very difficult to obtain a product useful in food industry and with significantly simultaneously reducing the amount of saturated fat and trans. One attempt to achieve this is disclosed in WO96/39855.

Surprisingly, it was found that it is possible to have solid fatty products complying with both nutritional properties and the needs of industry, which within their composition have a fat base which guarantees that the fatty product is completely trans fat free and that the percentage of saturated fat is as low as 35%. This fat base can be constituted mostly by tripalmitin and/or can be obtained from fully hydrogenation of palm oil.

### ABSTRACT OF THE INVENTION

The present invention relates to a fatty product having low content of saturated fatty acids and is free from trans-isomers. This fat product is formulated from a fat base constituted mostly by tripalmitin and/or from a fat base obtained from fully hydrogenation of palm oil.

The fatty product of the present invention complies with both the nutritional and health needs, as well as with the physical properties needed for a suitable utilization, as well as with the consumer's organoleptic requirements.

The fat product of the present invention can be directly used as ingredient for elaborating bread products, such as, cakes, cookies, and bread among others, and for deep industrial and institutional frying of snacks, ring shaped bread products, potatoes and other tubers and meats among others.

The purposes and additional advantages of the present invention will be more evident from the following detailed description and claims.

### DETAILED DESCRIPTION OF THE INVENTION

The present invention relates to obtaining a fatty product having low content of saturated fatty acids and which is free from trans-isomers, formulated from a fat base constituted mostly by tripalmitin and/or fully hydrogenated palm oil.

A main purpose of the present application is that the fat product must comply with the nutritional needs proper to these products and with the conditions dictated by the regulatory organisms which seek diminishing diseases related with consumption of certain types of food.

On the other hand, it is important that the fat product of the present invention has a melting and plasticity behavior wanted by food manufacturers which grant to these food melting, texture and taste characteristics which comply with consumers' demands. the product of the present invention mainly comprises three elements, being: (1) palm oil, (2) liquid oil and (3) a fat base comprising a tripalmitin enriched fraction and/or pure tripalmitin and/or fully hydrogenated palm oil.

### (1) Palm oil

the palm oil is obtained from palm varieties *Elaeis guineensis, Elaeis oleifera (Elaeis melanocacca)* or from the fruit of hybrids obtained by crossing *E. guineensis and E. oleifera.*

### (2) Liquid oil

The liquid oil having a very low saturated fat content can be colza oil in erucic acid (known as canola® extracted from the species *Brassica napus* and *Brassica campestris*; high oleic saffron oil, which is a natural mutation of the plant *carthamus tinctorius*; High oleic sunflower oil obtained through selective culture of the plant sunflower (*Helianthus annuus*) or a combination thereof.

### (3) fat base comprising a tripalmitin enriched fraction and/or pure tripalmitin and/or fully hydrogenated palm oil.

The fat base is constituted by a tripalmitin enriched fraction and/or pure tripalmitin and/or fully hydrogenated palm oil or a mixture thereof.

The tripalmitin is a triglyceride molecule in which the three fatty acids correspond to palmitic fat acid. The main natural source of this molecule is palm oil, containing between 6 and 8% tripalmitin.

The tripalmitin enriched fraction is obtained after mechanically or chemically fractioning palm oil several times. This enriched fraction must contain at least 20% of tripalmitin and preferably 50% of tripalmitin.

The pure tripalmitine can be obtained from reacting glycerol with pure palmitic fatty acidor through advanced compound separation and concentration methods such as molecular distillation of palm oil.

Fully hydrogenated palm oil is obtained through non-selective hydrogenation of palm oil until a maximum iodine index of 5 g of I₂/100g of fat and preferably a maximum of 3 g of I₂/100g of fat.

The novel fat product of the present invention comprises specific percentages of the above-mentioned elements.

In particular, the fat product comprises between 40% to 60% of (1) palm oil, 20% to 60% of (2) liquid oil and 5% to 25% of (3) fat base comprising a tripalmitin enriched fraction and/or pure tripalmitin and/or fully hydrogenated palm oil.

Preferably, the fat product of the present invention comprises between 40% to 60% of (1) palm oil, 25% to 45% of (2) liquid oil and 5% to 15% of (3) fat base comprising a tripalmitin enriched fraction and/or pure tripalmitin and/or fully hydrogenated palm oil.

The fat product of the present invention can be directly used as ingredient for elaborating bread products, such as, cakes, cookies, and bread among others, and for deep industrial and institutional frying of snacks, ring shaped bread products, potatoes and other tubers and meats among others.

At institutional level, there are two frying methods: in saucepan and deep frying. Deep frying is carried out in deep recipients wherein the proportion of oil to food is around at least 6 to 1. Deep frying is most frequently chosen because it is a fast preparation method and because it produces food having the wanted flavor and texture.

### Example 1.

### Obtention of a tripalmitin enriched fraction.

Palm oil having a melting point of 38ºC, which was crystallized at a temperature of 18ºC during 12 hours, is filtered in a press filter, and a soft fraction known as olein and a hard fraction known as stearine having a melting point of 51ºC were obtained. The stearine was again fractioned and a tripalmitin rich hard fraction (PPP) was obtained.

This tripalmitine rich fraction comprised 54.7% PPP and had a melting point of 57ºC.

### Example 2.

### Obtention of low saturated fat and trans fatty acids level butter to be used in deep frying of ring-shaped snacks.

60% of palm oil, 30% of high oleic sunflower oil and 10% of the tripalmitine rich fraction of example 1 were mixed.

This mixture was crystallized and packed.

The obtained butter has the following characteristics:

| Characteristic | amount |
|---|---|
| Fatty acids profile | |
| Lauric | 0.39% |
| Myristic | 0.79% |
| Palmitic | 34.01% |
| Stearic | 4.69% |
| Oleic | 50.44% |
| Linoleic | 8.53% |
| Linolenic | 0.35% |
| Total saturated fats | 40.57% |
| Total mono-unsaturated fatty acids | 50.55% |
| Total poly-unsaturated fatty acids | 8.87% |
| Total trans fatty acids | 0.28% |
| Tripalmitin (PPP) | 10.52% |
| Melting point | 46.2ºC |
| Solid content (SFC*) | |
| 10ºC | 40.2 |
| 20ºC | 24.7 |
| 30ºC | 15.5 |
| 40ºC | 9.5 |
| OSI Oxidation stability at 110ºC | 60 h |

| | |
|---|---|
| *SFC: Solid Fat Content | |

### Example 3.

### Obtention of low saturated fat and trans fatty acids level butter to be used in cake manufacturing.

50% of palm oil, 40% of low erucic fatty acid colza oil and 10% of the tripalmitin rich fraction of example 1 were mixed.

This mixture was crystallized and packed.

The obtained butter has the following characteristics:

| Characteristic | amount |
|---|---|
| Fatty acids profile | |
| Lauric | 0.21% |
| Myristic | 0.62% |
| Palmitic | 30% |
| Stearic | 3.86% |
| Oleic | 44.92% |
| Linoleic | 13.18% |
| Linolenic | 4.90% |
| Total saturated fatty acids | 35.34% |
| Total mono-unsaturated fatty acids | 45.53% |
| Total poly-unsaturated fatty acids | 19.10% |
| Total trans fatty acids | 0.24% |
| Tripalmitin (PPP) | 10.48% |
| Melting point | 45.6ºC |
| Solid content (SFC*) | |
| 10ºC | 34.0 |
| 20ºC | 20.6 |
| 30ºC | 12.7 |
| 40ºC | 8.7 |
| OSI Oxidation stability at 110ºC | 50 h |

| | |
|---|---|
| *SFC: Solid Fat Content | |

### Example 4

### Obtention of fully hydrogenated palm oil.

Palm oil having a melting point of 38ºC, was non-selectively hydrogenated at a pressure of around 30 psig (206 kPa manometric) and at a temperature of 160ºC until a iodine index of 1.16 g of I₂/100g fat was obtained.

This fully hydrogenated palm oil had the following fatty acids profile:

| Fatty acid | Amount |
|---|---|
| Lauric | 0.86% |
| Myristic | 1.20% |
| Palmitic | 42.19% |
| Stearic | 53.18% |
| Oleic | 1.77% |
| Linoleic | 0.28% |
| Arachidic | 0.52% |

### Example 5

### Obtention of low saturated fat and low trans fatty acids level butter to be used in cake manufacturing.

52% of palm oil, 40% of low erucic fatty acid colza oil and 8% of fully hydrogenated palm oil of example 4, were mixed.

This mixture was crystallized and packed.

The obtained butter has the following characteristics:

| Characteristic | Amount |
|---|---|
| Fatty acids profile | |
| Myristic | 0.53% |
| Palmitic | 27.86% |
| Stearic | 7.18% |
| Oleic | 46.12% |
| Linoleic | 14.14% |
| Linolenic | 4.03% |
| Total saturated fatty acids | 35.71% |
| Total mono-unsaturated fatty acids | 46.12% |
| Total poly-unsaturated fatty acids | 18.17% |
| Total trans fatty acids | 0.92% |
| Tripalmitin (PPP) | 10.52% |
| Melting point | 43.8ºC |
| Solid content (SFC*) | |
| 10ºC | 29.42 |
| 20ºC | 18.82 |
| 30ºC | 11.10 |
| 40ºC | 5.36 |
| OSI Oxidation stability at 110ºC | 50 h |

| | |
|---|---|
| *SFC: Solid Fat Content | |

Having described the invention, the following claims declare the protected scope of the invention:

## Claims

1. A fatty product **characterized in that** comprises three elements: (1) palm oil, (2) liquid oil and (3) a fat base comprising a tripalmitin enriched fraction and/or pure tripalmitin and/or fully hydrogenated palm oil, wherein the tripalmitin enriched fraction contains at least 20% tripalmitin, the percentage of (1) palm oil is from 40% to 60% and the percentage of (2) liquid oil is from 20% to 60%.

2. The fat product according to clam 1, wherein the palm oil is obtained from palm varieties *Elaeis guineensis*, *Eloeis oleifera* (*Elaeis melanococca*) or from the fruit of hybrids obtained by crossing *E. guineensis* and *E. oleifera*.

3. The fat product according to clam 1, wherein the liquid oil is selected from the group comprising: low erucic fatty acid containing colza oil, high oleic saffron oil, high oleic sunflower oil or a combination thereof.

4. The fat product according to claim 1, wherein the tripalmitine enriched fraction contains at least 50% tripalmitin.

5. The fat product according to claim 1, wherein fully hydrogenated palm oil is obtained through non-selective hydrogenation of palm oil until a maximum iodine index of 5 g of I₂/100g of fat has been obtained.

6. The fat product according to claim 1, wherein completely hydrogenated palm oil is obtained through non-selective hydrogenation of palm oil until a maximum iodine index of 3 g of I₂/100g of fat has been obtained.

7. The fat product according to claim 1, wherein the percentage of (2) liquid oil is from 25% to 45%.

8. The fat product according to claim 1, wherein the percentage of (3) fat base comprising a tripalmitin enriched fraction and/or pure tripalmitin and/or fully hydrogenated palm oil is from 5% to 25%.

9. The fat product according to claim 1, wherein the percentage of (3) fat base comprising a tripalmitin enriched fraction and/or pure tripalmitin and/or completely hydrogenated palm oil is from 5% to 15%.

## Patentansprüche

1. Fettprodukt, **dadurch gekennzeichnet, dass** es drei Elemente aufweist: (1) Palmöl, (2) flüssiges Öl und (3) eine Fettbasis mit einer mit Tripalmitin angereicherten Fraktion und/oder reinem Tripalmitin und/oder vollständig hydriertem Palmöl, wobei die mit Tripalmitin angereicherte Fraktion mindestens 20 % Tripalmitin enthält, wobei der Prozentsatz von (1) Palmöl 40 % bis 60 % ist und der Prozentsatz von (2) flüssigem Öl 20 % bis 60 % ist.

2. Fettprodukt nach Anspruch 1, wobei das Palmöl von den Palmenarten *Elaeis guineensis*, *Elaeis oleifera* (*Elaeis melanococca*) oder von der Frucht von Hybriden erhalten wird, die durch Kreuzen von *E. guineensis* und *E. oleifera* erhalten werden.

3. Fettprodukt nach Anspruch 1, wobei das flüssige Öl aus der Gruppe ausgewählt ist, die aufweist: niedere Erucafettsäure, die Rapsöl enthält, Safranöl mit hohem Ölsäuregehalt, Sonnenblumenöl mit hohem Ölsäuregehalt oder eine Kombination davon.

4. Fettprodukt nach Anspruch 1, wobei die mit Tripalmitin angereicherte Fraktion mindestens 50 % Tripalmitin enthält.

5. Fettprodukt nach Anspruch 1, wobei vollständig hydriertes Palmöl durch nicht selektive Hydrierung von Palmöl, bis eine maximale Jodzahl von 5 g von I₂/100g von Fett erhalten wurde, erhalten wird.

6. Fettprodukt nach Anspruch 1, wobei vollständig hydriertes Palmöl durch nicht selektive Hydrierung von Palmöl, bis eine maximale Jodzahl von 3 g von I₂/100 g von Fett erhalten wurde, erhalten wird.

7. Fettprodukt nach Anspruch 1, wobei der Prozentsatz von (2) flüssigem Öl 25 % bis 45 % ist.

8. Fettprodukt nach Anspruch 1, wobei der Prozentsatz von (3) Fettbasis mit einer mit Tripalmitin angereicherten Fraktion und/oder reinem Tripalmitin und/oder vollständig hydriertem Palmöl 5 % bis 25 % ist.

9. Fettprodukt nach Anspruch 1, wobei der Prozentsatz von (3) Fettbasis mit einer mit Tripalmitin angereicherten Fraktion und/oder reinem Tripalmitin und/oder vollständig hydriertem Palmöl 5 % bis 15 % ist.

## Revendications

1. Produit gras **caractérisé en ce qu'**il comprend trois éléments, à savoir de l'huile de palme (1), de l'huile liquide (2) et une base graisseuse (3) comprenant une fraction enrichie en tripalmitine et/ou de la tripalmitine pure et/ ou de l'huile de palme entièrement hydrogénée, dans lequel la fraction enrichie en tripalmitine contient au moins 20% de tripalmitine, le pourcentage en huile de palme est de 40% à 60% et le pourcentage en huile liquide (2) est de 20% à 60%.

2. Produit gras suivant la revendication 1, dans lequel l'huile de palme est obtenue des variétés de palme *Elaeis guineensis*, *Elaeis oleifera* (*Elaeis melanococca*) ou du fruit d'hybrides obtenus par croisement d'*E.guineensis* et *E. oleifera*.

3. Produit gras suivant la revendication 1, dans lequel l'huile liquide est choisie parmi le groupe constitué d'huile de colza à faible teneur en acide gras érucique, de l'huile de safran à forte teneur en acide gras oléique, de l'huile de tournesol à forte teneur en acide gras oléique ou d'une combinaison de celles-ci.

4. Produit gras suivant la revendication 1, dans lequel la fraction enrichie en tripalmitine contient au moins 50% de tripalmitine.

5. Produit gras suivant la revendication 1, dans lequel l'huile de palme hydrogénée est obtenue par hydrogénation non sélective d'huile de palme jusqu'à obtention d'un index d'iode maximal de 5g par I₂/100g de graisse.

6. Produit gras suivant la revendication 1, dans lequel de l'huile de palme complètement hydrogénée est obtenue par hydrogénation non sélective d'huile de palme jusqu'à obtention d'un index d'iode maximal de 3 g par I₂/100g de graisse.

7. Produit gras suivant la revendication 1, dans lequel le pourcentage en huile liquide (2) est de 25 à 45%.

8. Produit gras suivant la revendication 1, dans lequel le pourcentage en base graisseuse (3) comprenant une fraction enrichie en tripalmitine et/ou de la tripalmitine pure et/ou de l'huile de palme entièrement hydrogénée est de 5% à 25%.

9. Produit gras suivant la revendication 1, dans lequel le pourcentage en base graisseuse (3) comprenant une fraction enrichie en tripalmitine et/ou de la tripalmitine pure et/ou de l'huile de palme entièrement hydrogénée est de 5% à 15%.
